# FASCICULE DE BREVET EUROPEEN

(11) **EP 2 583 332 B1**
(45) Date de publication et mention de la délivrance du brevet: **16.04.2014**
(21) Numéro de dépôt: 11724676.9
(22) Date de dépôt: 15.06.2011
(51) Int. Cl.: H01M 2/26, H01M 4/58, H01M 4/66, H01M 4/74, H01M 4/04, H01M 10/0525, H01M 4/485, H01M 2/08, H01M 4/131, H01M 4/136, H01M 4/72, H01M 10/0585, H01M 6/00

(54) **COLLECTEUR DE COURANT AVEC MOYENS D'ETANCHEITE INTEGRES, BATTERIE BIPOLAIRE COMPRENANT UN TEL COLLECTEUR**
STROMABNEHMER MIT INTEGRIERTER DICHTUNG SOWIE ZWEIPOLIGE BATTERIE MIT EINEM DERARTIGEN STROMABNEHMER
CURRENT COLLECTOR HAVING BUILT-IN SEALING MEANS, AND BIPOLAR BATTERY INCLUDING SUCH A COLLECTOR

(30) Priorité: 16.06.2010 FR 1054773
(43) Date de publication de la demande: 24.04.2013
(73) Titulaire: Commissariat à l'Énergie Atomique et aux Énergies Alternatives, 75015 Paris (FR)
(72) Inventeur: CHAMI, Marianne, F-38600 Fontaine (FR)
(74) Mandataire: Ilgart, Jean-Christophe
(86) Numéro de dépôt international: PCT/EP2011/059943
(87) Numéro de publication internationale: WO 2011/157751

(56) Documents cités:
- WO-A1-2007/118281
- JP-A- 2009 054 484
- JP-A- 2010 218 985
- US-A- 5 554 459

## Description

### DOMAINE TECHNIQUE

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne plus particulièrement un accumulateur électrochimique au lithium comportant au moins un collecteur de courant à fonction bipolaire, aussi appelé batterie bipolaire : dans une telle batterie bipolaire, le collecteur bipolaire supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention vise à améliorer l'étanchéité des générateurs électrochimiques vis-à-vis de l'électrolyte, et en particulier à améliorer l'étanchéité d'une batterie bipolaire vis-à-vis de l'électrolyte sous forme liquide.

### ART ANTÉRIEUR

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733 ;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux demandes de brevets ou brevets concernant de telles batteries bipolaires, tels que US 7279248, US 7220516, US 7320846, US 7163765, WO 03/047021, WO 2006/061696, US 7097937.

Les avantages subséquents d'une batterie bipolaire sont d'avoir une masse réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire.

Cela est d'ailleurs corroboré par le fait que la majorité de la littérature brevets portant sur le domaine des batteries Li-ion bipolaires concerne des solutions d'étanchéité pour éviter les fuites l'électrolyte d'un compartiment à l'autre (courts circuits ioniques).

Parmi les demandes de brevet ou brevets déjà cités ci-dessus, on peut citer le brevet US 7220516 qui décrit une solution avec un film adhésif flexible 5, 6, collé sur la périphérie du collecteur bipolaire. On peut également citer le brevet US 7320846 qui décrit une solution d'enrobage des collecteurs 4 et électrolytes 6 dans une résine 10. On peut également citer le brevet US 7163765 qui décrit une solution d'étanchéité avec des entretoises 9 mixtes en polyamide/PP agencées entre collecteurs bipolaires le polyamide étant soudé directement à la périphérie des collecteurs à distance des cellules). Le brevet US 7097937 propose quant à lui une solution d'étanchéité double puisqu'une barrière intérieure 14,22 en fluoropolymère est agencée sur la périphérie du collecteur bipolaire 11 et un cadre extérieur 18, 23 en élastomère est agencé à l'extérieur de la barrière 14, 22 sur et autour du collecteur bipolaire avec éventuellement l'agencement d'une bague supplémentaire 15 en élastomère sur le collecteur 11. Enfin, on peut citer la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

Le document WO 2007/118281 A1 décrit un collecteur de courant pour générateur électrochimique au lithium.

Ainsi, on peut résumer de la manière suivante les solutions déjà envisagées pour améliorer l'étanchéité des compartiments entre eux vis-à-vis de l'électrolyte dans une batterie bipolaire Li-ion :
- réalisation systématique du collecteur de courant bipolaire aussi appelé électrode bipolaire sous la forme d'une plaque,
- utilisation de colles ou résines diverses à la périphérie de la plaque,
- augmentation du format de plaque de collecteur de courant bipolaire pour créer une barrière supplémentaire à l'électrolyte.

Le but de l'invention est de proposer une autre solution que celles déjà envisagées pour améliorer l'étanchéité des compartiments entre eux vis-à-vis de l'électrolyte dans une batterie bipolaire Li-ion.

Un autre but de l'invention est de proposer une autre solution d'étanchéité des compartiments entre eux vis-à-vis de l'électrolyte dans une batterie bipolaire Li-ion, qui soit simple à réaliser.

### EXPOSÉ DE L'INVENTION

Pour ce faire, l'invention a pour objet un dispositif pour générateur électrochimique au lithium, caractérisé en qu'il comprend une bande en matériau isolant électrique comprenant au moins un polymère et une grille métallique ou une feuille métallique en relief, formant un collecteur de courant, logée dans la bande en affleurant sur ses deux faces, la périphérie de la bande étant dépourvue de la grille ou de la feuille en relief et au moins une des deux parties affleurantes de la grille ou de la feuille en relief étant recouverte d'une électrode en matériau d'insertion au lithium.

Par « affleurant » sur ces deux faces, on entend ici et dans le cadre de l'invention qu'une partie au moins de la feuille ou de la grille métallique émerge en surface de la bande et qu'il y a une continuité de conduction électrique par continuité de matière du matériau formant feuille ou grille dans l'épaisseur de la bande.

Ainsi, selon l'invention, on intègre en quelque sorte les moyens d'étanchéité à une pièce dont la fonction est d'être un collecteur de courant. Autrement dit, on définit en quelque sorte un nouveau semi-produit d'une batterie intégrant à la fois :
- le collecteur de courant qui lorsqu'il est bipolaire assure la conduction électrique entre la cathode d'une cellule et l'anode d'une cellule électrochimique adjacente, i-e empilée immédiatement au dessous ou au dessus,
- une zone périphérique exclusivement en matériaux isolants électriques qui participe une fois assemblée à la réalisation de l'étanchéité aux électrolytes de la batterie. Il va de soi que dans le cadre de l'invention, l'homme de l'art veille à définir un ou des matériaux isolants (polymère(s)) qui ne fluent pas dans les gammes de température de fonctionnement d'une batterie bipolaire.

Un dispositif selon l'invention peut avoir une épaisseur comprise entre 10 et 100 µm, de préférence entre 25 et 50 µm.

Un dispositif selon l'invention peut avoir toute forme géométrie, telle qu'une section de forme polygonale, par exemple un rectangle ou un carré, avec une zone dépourvue de grille ou de feuille telle que définie ci-dessus agencée à la périphérie.

On peut envisager des dimensions planaires de longueur comprise entre 40 et 70 cm, typiquement de l'ordre de 50 cm, et de largeur comprise entre 10 et 25 cm, typiquement de l'ordre de 15 cm. La zone périphérique dépourvue de feuille ou de grille selon l'invention peut former avantageusement un cadre de largeur comprise entre 1 mm et 10 cm, plus particulièrement entre 3 mm et 12 mm, typiquement de l'ordre de 5 mm. Ainsi, la zone périphérique dépourvue de feuille ou de grille selon l'invention peut représenter une superficie inférieure à 25 % de la superficie totale du dispositif, de préférence inférieure à 20 %, de préférence encore inférieure à 15 %.

Ainsi, le semi-produit mixte collecteur de courant/zone d'étanchéité périphérique proposé selon l'invention est une rupture technologique avec ce qui était proposé jusqu'à ce jour et qui consistait à réaliser systématiquement le collecteur sous forme d'une plaque et de rapporter un joint d'étanchéité sur celle-ci. Le dispositif selon l'invention permet donc de simplifier l'étanchéification proprement dite et d'apporter un fort gain en masse (du fait de la suppression de plaque en tant que collecteur) et, par là en performance. En effet, à masse égale, la densité d'énergie d'une batterie selon l'invention est augmentée et donc on obtient de meilleures performances pour ladite batterie. En outre, l'étanchéité de la batterie étant améliorée, la batterie est plus performante.

Selon une variante, le polymère majoritaire constituant la bande est une polyoléfine.

La bande peut comprendre au moins un autre polymère, ledit autre polymère étant interposé entre la polyoléfine et le collecteur de courant pour améliorer l'accroche entre eux.

Selon une autre variante, l'autre polymère peut être choisi parmi un polyester ou un polyuréthane.

La bande peut comprendre en outre au moins un promoteur d'adhérence, ledit promoteur d'adhérence étant interposé entre la polyoléfine le collecteur de courant pour améliorer l'accroche entre eux.

Le polymère majoritaire constituant la bande peut être également une résine bi-composante, de préférence une résine acrylique. La résine acrylique présente en effet une excellente tenue mécanique au contact des électrolytes carbonatés.

Selon une variante, le polymère peut être choisi parmi les thermoplastiques polyamide-imide (PAI), polyéther-imide (PEI), polyéther-sulfone (PES) et polyéther-éther-cétone (PEEK).

En fonction du type de matériaux d'électrode d'insertion au lithium choisi, le collecteur de courant formé par la grille ou feuille en relief métallique peut être en aluminium ou sous métallisée en surface d'un autre métal, par exemple en aluminium superposé à du cuivre.

La grille métallique peut présenter un maillage régulier.

Le collecteur de courant est de préférence conformé en un cadre centré dans la bande en matériau isolant.

Lorsque le collecteur du courant du dispositif est destiné à être bipolaire, les deux parties affleurantes de la grille ou feuille en relief sont recouvertes chacune d'une électrode en matériau d'insertion au Lithium.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par matériau d'insertion au lithium, en particulier pour l'électrode négative, on entend également un matériau choisi parmi: Oxyde de titane lithié ou non, par exemple Li4Ti5O12 ou TiO2.

Plus particulièrement, le matériau d'électrode négative peut être choisi parmi les matériaux carbonés, les oxydes de titane non lithiès et leurs dérivés et les oxydes de titane lithiés tels que Li4Ti5O12 et leurs dérivés et un mélange de ceux-ci.

Par « dérivé lithié », on entend ici et dans le cadre de l'invention, des composés de formule Li ₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Lorsque le collecteur du courant du dispositif est destiné à être monopolaire, une seule des deux parties affleurantes de la grille ou feuille en relief est recouverte d'une électrode en matériau d'insertion au Lithium.

L'invention concerne également une batterie bipolaire comprenant au moins deux cellules électrochimiques empilées l'une sur l'autre et au moins un dispositif décrit ci-dessus avec les deux parties affleurantes recouvertes chacune d'une électrode, dans lequel l'une des deux parties affleurantes du collecteur de courant est recouverte de l'anode en matériau d'insertion au lithium de l'une des deux cellules et l'autre des deux parties affleurantes du collecteur de courant est recouverte de la cathode en matériau d'insertion au lithium de l'autre des deux cellules, la périphérie de la bande en au moins un polymère constituant une zone périphérique d'une paroi étanche aux électrolytes des deux cellules qui entoure celles-ci.

Une telle batterie comprend en outre avantageusement au moins un dispositif décrit ci-dessus avec une seule des parties affleurantes recouverte d'une électrode, l'autre des deux parties affleurantes non recouvertes par une électrode étant en contact avec un collecteur de courant terminal.

Les dimensions des collecteurs de courant sont choisies sensiblement égales à celles de toutes les électrodes.

De préférence, les anodes sont en Li₄Ti₅O₁₂ et les cathodes en LiFeP04.

L'invention concerne enfin un procédé de réalisation d'une batterie bipolaire comprenant au moins deux cellules électrochimiques empilées l'une sur l'autre comprenant les étapes suivantes :
a/ réalisation d'un dispositif décrit précédemment avec les deux parties affleurantes recouvertes chacune d'une électrode en matériau d'insertion au lithium et deux dispositifs dont une seule des parties affleurantes est recouverte d'une électrode en matériau d'insertion au lithium de sorte que :
   - l'une des parties affleurantes du collecteur de courant d'un des deux dispositifs décrits ci-dessus est recouverte d'une anode en matériau d'insertion au lithium,
   - l'une des parties affleurantes du collecteur de courant de l'autre des deux dispositifs décrits ci-dessus est recouverte d'une cathode en matériau d'insertion au lithium et,
   - l'une des parties affleurantes du collecteur de courant du dispositif décrit ci-dessus est recouverte d'une cathode en matériau d'insertion au lithium tandis que l'autre des parties affleurantes du collecteur de courant du dispositif décrit ci-dessus est recouverte d'une anode en matériau d'insertion au lithium,
b/ empilement des trois dispositifs avec intercalage d'un séparateur entre deux adjacents, l'empilement avec intercalage étant réalisé de sorte que :
   - l'anode de l'un des deux dispositifs décrits ci-dessus est en regard de la cathode du dispositif décrit ci-dessus en étant séparés d'un premier séparateur,
   - la cathode de l'autre des deux dispositifs décrits ci-dessus est en regard de l'anode du dispositif décrit ci-dessus en étant séparés d'un deuxième séparateur,
c/ mise en pression des périphéries des trois bandes des dispositifs les unes contre les autres, les séparateurs étant imprégnés chacun d'un électrolyte,
d/ maintien des trois bandes pressées les unes contre les autres afin de constituer une paroi étanche aux électrolytes des deux cellules qui entoure celles-ci.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par sel de Lithium, on entend de préférence, un sel choisi parmi LiPF6, LiClO4, LiBF4 et LiAsF6.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe.

A titre d'exemples de liquides ioniques, on peut citer des liquides ioniques à base d'anions hydrophobes comme le trifluorométhanesulfonate (CF₃SO₃), bis(trifluorométhanesulfonate imide [(CF₃SO₂)₂N] et tris(trifluorométhanesulfonate) méthide [(CF₃ SO₂)₃C].

En ce qui concerne, l'étape d'imprégnation du séparateur par l'électrolyte, on peut envisager soit de le faire avant l'empilement, c'est-à-dire d'avoir imprégné le séparateur par l'électrolyte lors de sa mise en place (intercalage), soit une fois l'empilement selon l'étape b/ achevé.

Selon un mode de réalisation de l'invention, plusieurs dispositifs comportant une électrode sur chaque face peuvent être utilisés de façon à créer n cellules électrochimiques dans une batterie bipolaire selon l'invention, n étant un entier positif. Le nombre entier n peut par exemple être égal à 13, ce qui implique alors la réalisation d'un nombre égal 12 dispositifs selon l'invention, chacun une électrode sur chaque face. Autrement dit, on peut réaliser une batterie bipolaire comprenant n cellules électrochimique empilées individuellement les unes sur les autres, en réalisant les étapes a/ à d/ susmentionnées avec (n-1) dispositifs chacun avec une électrode sur chaque face et deux dispositifs, aux extrémités de l'empilement, chacun avec une seule électrode sur une face.

On peut réaliser avantageusement et de manière simple les étapes c/ et d/ selon deux alternatives :
- soit par la mise en place de l'emballage rigide de la batterie bipolaire,
- soit par thermoscellage à l'aide d'un mors en forme de U autour des parties périphériques des bandes en matériau isolant électrique.

Le dépôt d'au moins une électrode sur l'une des parties affleurantes d'au moins un des dispositifs peut être réalisé par une technique d'impression usuelle telle que sérigraphie, héliographie, flexographie, spray,....

La conduction électronique du collecteur de courant selon l'invention sous forme de grille ou feuille en relief peut être améliorée en utilisant des maillages de grilles ou reliefs resserrés ou une métallisation en surface de la grille ou de la feuille en relief.

### BRÈVE DESCRIPTION DES DESSINS

D'autres avantages et caractéristiques ressortiront mieux à la lecture de la description détaillée, faite à titre illustratif en référence aux figures suivantes parmi lesquelles :
- la figure 1 est une vue schématique en coupe longitudinale d'une batterie bipolaire au lithium selon l'état de l'art,
- les figures 2A et 2B sont respectivement des vues de face et en coupe d'un collecteur de courant bipolaire utilisé dans une batterie bipolaire au lithium selon l'état de l'art,
- les figures 3A et 3B sont respectivement des vues de face et en coupe d'un autre collecteur de courant bipolaire utilisé dans une batterie bipolaire au lithium selon l'état de l'art,
- les figures 4A et 4B sont respectivement des vues de face et en coupe d'une partie d'un dispositif selon l'invention dépourvu d'électrode,
- la figure 5 est une vue schématique illustrant un premier procédé de réalisation d'une partie d'un dispositif selon l'invention dépourvu d'électrode montré en vues de face et en coupe aux figures 5A et 5B,
- la figure 6 est une vue schématique illustrant un deuxième procédé de réalisation d'une partie d'un dispositif selon l'invention dépourvu d'électrode montré en vues de face et en coupe aux figures 6A et 6B,
- la figure 7 est une vue schématique illustrant un troisième procédé de réalisation d'une partie d'un dispositif selon l'invention dépourvu d'électrode montré en vues de face et en coupe aux figures 7A et 7B,
- les figures 8A à 8D' sont des vues schématiques illustrant chacune une étape d'un procédé de réalisation d'une batterie polaire à partir de trois dispositifs selon l'invention, l'étape 8D' étant une étape alternative à l'étape 8D.

### EXPOSÉ DÉTAILLÉ DE MODES DE RÉALISATION PARTICULIERS

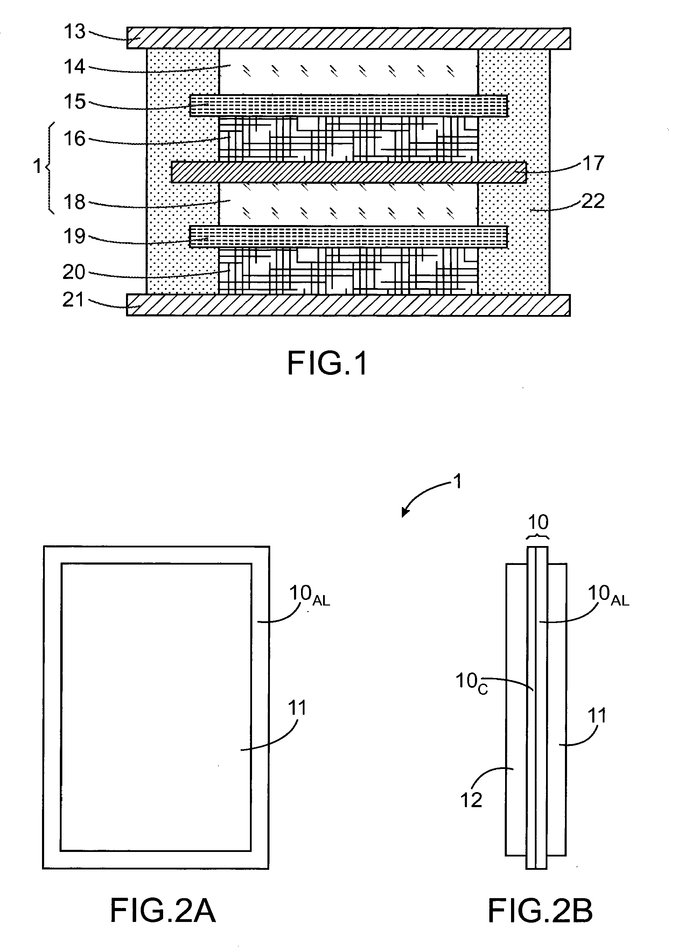

On a représenté une batterie bipolaire Li-ion selon l'état de l'art en figure 1, telle qu'elle est illustrée dans la demande de brevet WO 03/047021.

Cette batterie comporte en partie supérieure un substrat conducteur en aluminium 13 (collecteur de courant terminal positif) et une couche active 14 à base de matériau d'insertion au lithium positif, tel que du Li_{1.04}Mn_{1.96}O₄ et en partie inférieure un substrat conducteur en aluminium 21 (collecteur de courant terminal négatif) et une couche active 20 à base de matériau d'insertion au lithium positif, tel que du Li₄Ti₅O₁₂.

Au sein de cette batterie, une électrode bipolaire 1, aussi appelé collecteur de courant bipolaire, comprend une couche active positive 18 et une couche active négative 19 de part et d'autre d'un substrat conducteur en aluminium 17 sous la forme d'une plaque.

Les électrodes inférieure 20 et supérieure 14 sont séparées de l'électrode bipolaire 1 par deux séparateurs 15, 19 dans lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 17.

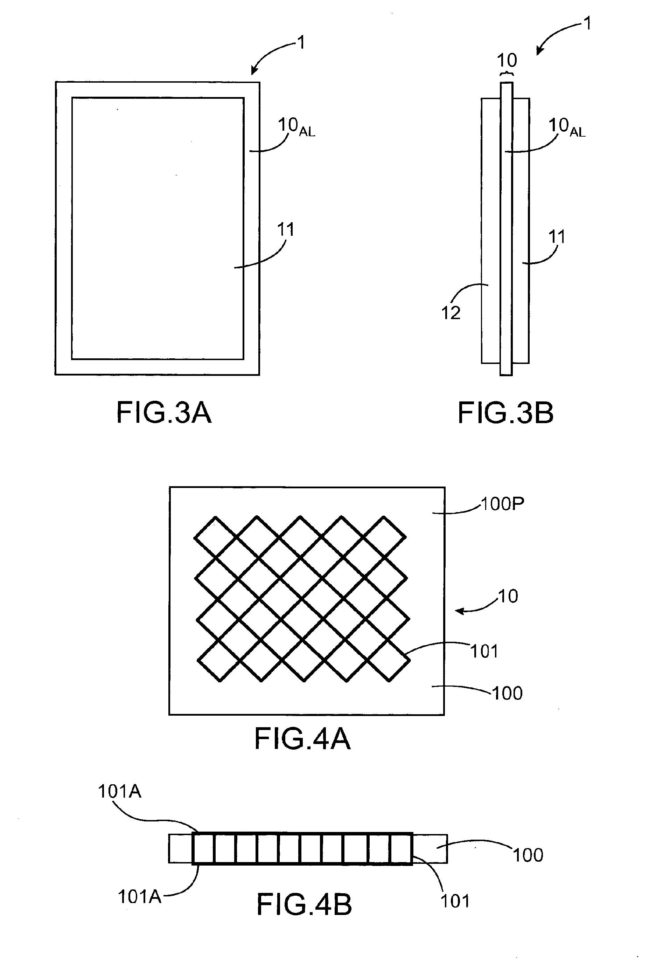

Un collecteur de courant bipolaire 10 ou 17 selon l'état de l'art est, en fonction des matériaux d'insertion aux ions lithium employés pour la réalisation des électrodes :
- soit constitué de deux plaques superposées, dont l'une typiquement en aluminium 10AL est recouverte par une cathode 11 et l'autre typiquement en cuivre 10C est recouverte par une anode 12 (figures 2A et 2B),
- soit constitué d'une seule plaque typiquement en aluminium 10AL recouverte sur une des faces par une cathode 11 et sur l'autre de ses faces par une anode 12 (figures 3A et 3B).

La difficulté principale rencontrée dans la conception d'une batterie bipolaire selon l'état de l'art est la réalisation de compartiments parfaitement étanches à l'électrolyte, en général sous forme liquide, les uns vis-à-vis des autres, tel qu'entre les compartiments référencés 14, 15, 16 et 18, 19, 20 sur la figure 1.

La réalisation des joints 22 ou l'augmentation des plaques 10 de l'électrode bipolaire selon l'état de l'art pour y parvenir ne sont pas nécessairement satisfaisants.

Aussi, l'inventrice propose une solution de conception d'un collecteur de courant complètement différente.

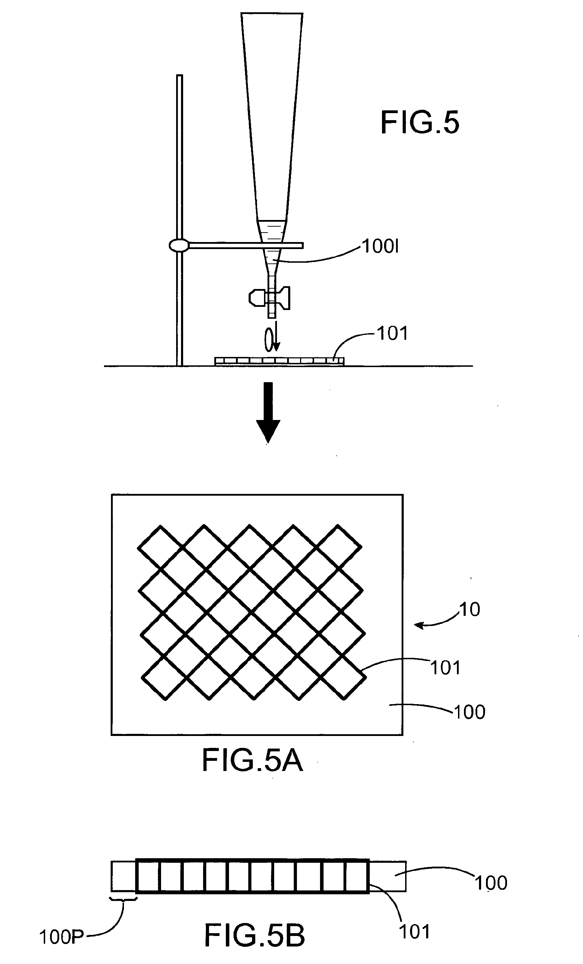

Aux figures 5A à 7B, on a illustré trois procédés de réalisation différents d'une partie 10 d'un dispositif selon l'invention.

On obtient selon chacun de ces trois procédés une grille ou une feuille en relief métallique 101 formant un collecteur de courant dans la batterie bipolaire logée dans une bande 100 en matériau isolant comprenant au moins un polymère, la grille ou la feuille en relief 101 affleurant au niveau 101A sur les deux faces de la bande 100, comme cela ressort de manière visible aux figures 4B, 5B, 6B, 7B. On peut d'ailleurs voir sur ces figures ainsi que sur celles de face correspondantes 4A, 5A, 6A, 7A que la grille ou feuille en relief 101 est conformée en un cadre centré à l'intérieur de la bande 100 en polymère. En outre, la grille ou feuille en relief 101 a un maillage régulier, chaque maille ayant une forme de losange.

Selon le procédé de la figure 5, on porte à sa température de fusion un polymère, résine bi-composant ou polyoléfine, sous forme liquide 100L, puis on coule une quantité déterminée, optimale pour l'application, le polymère ainsi fondu et donc sous forme de solution visqueuse sur la grille 101 de sorte que celle-ci affleure en surface, de part et d'autre de la partie 100L en polymère ainsi constituée. L'ensemble (grille métallique 101 et bande en polymère 100) est ensuite laissé à température ambiante pour que le polymère durcisse et accroche ainsi à la partie conductrice constitue par la grille métallique 101 dans laquelle il a été coulé. Ainsi, la partie 10 du dispositif selon l'invention présente une grille métallique 101 affleurante sur les deux faces d'une bande 100 en polymère durci. Pour améliorer l'accroche du polymère au collecteur de courant un promoteur d'adhérence (à base d'amine) pourra être employé.

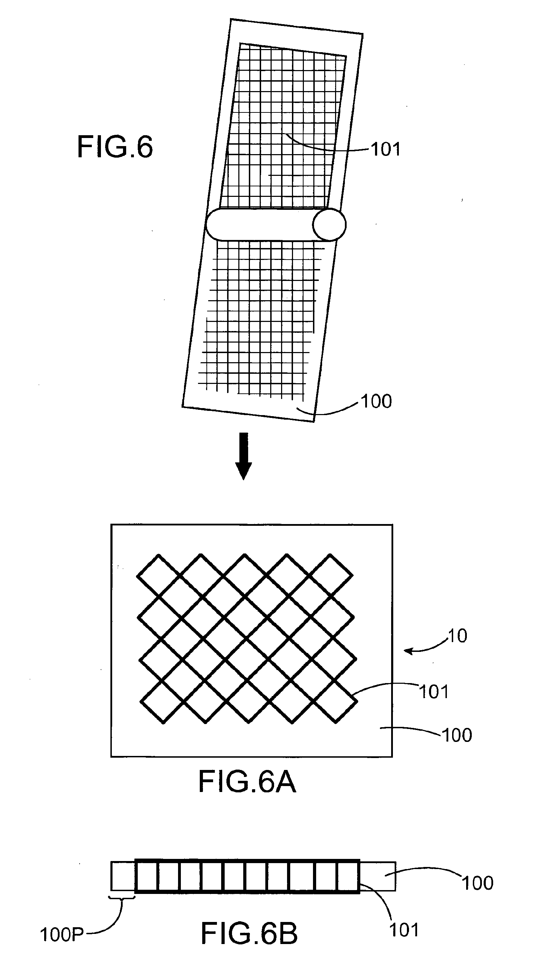

Selon le procédé de la figure 6, on réalise un laminage d'une grille métallique 101 à une feuille de polymère 100 de sorte qu'elle la pénètre dans toute son épaisseur et qu'elle affleure en surface de la feuille de polymère. De préférence, ici aussi la grille 101 est conformée en un cadre centré à l'intérieur de la feuille de polymère 100.

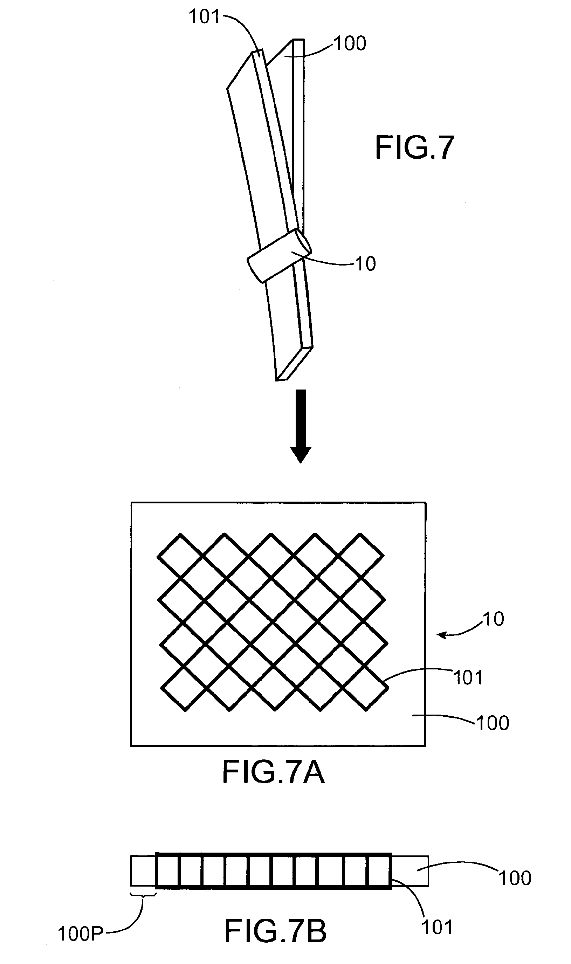

Selon le procédé de la figure 7, une feuille d'aluminium 101 en relief est laminée à une bande de polymère 100 de sorte qu'elle pénètre entièrement le polymère 101 et qu'elle affleure sur les deux faces de la bande de polymère 101.

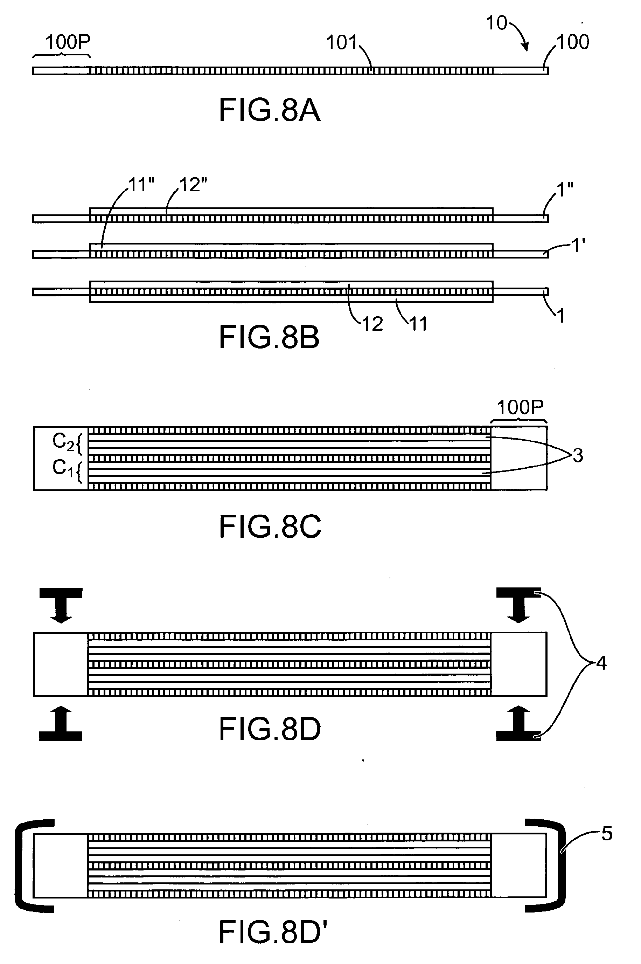

Ainsi, on obtient dans un premier temps la partie support 10 du dispositif selon l'invention obtenue (figure 8A), c'est-à-dire le semi-produit mixte zone fonctionnelle d'étanchéité 100/collecteur de courant 101.

On réalise alors le dépôt d'au moins une électrode en matériau d'insertion au lithium pour obtenir en final le dispositif selon l'invention.

Tel qu'illustré en figure 8B, pour réaliser une batterie bipolaire complète, on réalise trois dispositifs distincts selon l'invention :
- pour obtenir un dispositif 1 « bipolaire », on dépose une couche 12 de matériau d'insertion négatif au lithium (anode), telle qu'une couche en Li₄Ti₅O₁₂, sur l'une des parties affleurantes 101A de la grille, et une couche 11 de matériau d'insertion positif au lithium (cathode), telle qu'une couche en LiFePO4, sur l'autre partie affleurante 101A de la grille 101,
- pour obtenir un dispositif 1' « monopolaire » positif, on dépose uniquement une couche 11' de matériau d'insertion positif au lithium (cathode), telle qu'une couche en LiFePO4, sur l'une des parties affleurante 101A de la grille 101,
- pour obtenir un dispositif 1" « monopolaire » négatif, on dépose uniquement une couche 12" de matériau d'insertion négatif au lithium (anode), telle qu'une couche en Li₄Ti₅O₁₂, sur l'une des parties affleurantes 101A de la grille 101.

Pour ces trois dispositifs 1, 1', 1", les couches d'électrodes sont avantageusement réalisée réalisées par une technique d'impression (héliographie, flexographie ou sérigraphie) sur la partie collectrice de courant 101, en laissant méthodiquement la périphérie 100P de la bande 100 en polymère dépourvue de toute électrode. Toutes les couches d'électrodes 11, 12, 11', 12' et les grilles 101 sont sensiblement de mêmes dimensions, ainsi que toutes les zones périphériques 100P des bandes en polymère.

Eventuellement, on peut prévoir une étape de calandrage afin d'assurer une meilleure percolation électronique au sein de chaque électrode.

On empile en les alignant alors les dispositifs 1, 1', 1" avec celui bipolaire 1 entre les deux monopolaires 1', 1" et en les séparant par une membrane isolante électrique et conductrice ionique 3 constituant un séparateur: tel qu'illustré en figure 8C, on obtient alors une batterie bipolaire avec deux cellules électrochimiques C1, C2 empilées l'une sur l'autre et avec une zone périphérique continue 100P sur toute la hauteur.

Une fois, l'empilement réalisé, on imprègne chaque séparateur d'un électrolyte. Alternativement, l'électrolyte peut déjà imprégner chaque séparateur lors de sa mise en place dans l'empilement.

Pour réaliser l'étanchéité définitive, entre les compartiments d'une telle batterie bipolaire, on met en pression les périphéries 100P des trois bandes 100 des dispositifs 1, 1', 1" les unes contre les autres et l'on maintient les trois bandes pressées les unes contre les autres. On constitue ainsi une paroi étanche aux électrolytes 3 des deux cellules C1, C2, qui entoure celles-ci sur toute la hauteur de l'empilement. Deux alternatives peuvent être envisagées pour réaliser cette étape d'étanchéité définitive :
- soit on applique une pression en périphérie 100P de la bande en polymère 100 des cellules, avantageusement à l'aide de l'emballage rigide 4 de la batterie (figure 8D),
- soit on réalise un thermoscellage des périphéries 100P de polymère, de façon uniforme sur la hauteur, avantageusement à l'aide de mors en forme de U (figure 8D').

## Revendications

1. Dispositif (1, 1', 1") pour générateur électrochimique au lithium, caractérisé en qu'il comprend une bande (100) en matériau isolant électrique comprenant au moins un polymère et une grille (101) ou une feuille en relief métallique, formant un collecteur de courant, logée dans la bande en affleurant sur ses deux faces, la périphérie de la bande (100P) étant dépourvue de la grille ou feuille en relief et au moins une des deux parties affleurantes (101A) de la grille ou feuille en relief étant recouverte d'une électrode en matériau d'insertion au lithium.

2. Dispositif (1, 1', 1") selon la revendication 1, dans lequel le polymère majoritaire constituant la bande est une polyoléfine.

3. Dispositif (1, 1', 1") selon la revendication 2, dans lequel la bande comprend au moins un autre polymère, par exemple choisi parmi un polyester ou un polyuréthanne, ledit autre polymère étant interposé entre la polyoléfine et le collecteur de courant pour améliorer l'accroche entre eux.

4. Dispositif (1, 1', 1") selon la revendication 2, dans lequel la bande comprend au moins un promoteur d'adhérence, ledit promoteur d'adhérence étant interposé entre la polyoléfine et le collecteur de courant pour améliorer l'accroche entre eux.

5. Dispositif (1, 1', 1") selon la revendication 1, dans lequel le polymère majoritaire constituant la bande est une résine bi-composant.

6. Dispositif (1, 1', 1") selon l'une des revendications précédentes, dans lequel le collecteur de courant (101) est en aluminium et/ou est une grille (101) ou feuille en relief métallisée en surface d'un autre métal.

7. Dispositif (1, 1', 1") selon l'une des revendications précédentes, dans lequel le collecteur de courant est conformé en un cadre centré dans la bande en matériau isolant.

8. Dispositif (1) selon l'une des revendications précédentes, dans lequel les deux parties affleurantes (101A) du collecteur de courant (101) sont recouvertes chacune d'une électrode (11, 12) en matériau d'insertion au Lithium.

9. Dispositif (1', 1") selon l'une des revendications 1 à7, dans lequel une seule des deux parties affleurantes du collecteur de courant est recouverte d'une électrode en matériau d'insertion au Lithium (11', 12").

10. Batterie bipolaire comprenant au moins deux cellules électrochimiques (C1, C2) empilées l'une sur l'autre et au moins un dispositif (1) selon la revendication 8, dans lequel l'une des deux parties affleurantes du collecteur de courant (101) est recouverte de l'anode (12) en matériau d'insertion au lithium de l'une des deux cellules et l'autre des deux parties affleurantes du collecteur de courant (101) est recouverte de la cathode (11) en matériau d'insertion au lithium de l'autre des deux cellules, la périphérie (100P) de la bande en au moins un polymère constituant une zone périphérique d'une paroi étanche aux électrolytes des deux cellules qui entoure celles-ci.

11. Batterie bipolaire selon la revendication 10, comprenant en outre au moins un dispositif (1', 1'') selon la revendication 9 avec l'autre des deux parties affleurantes non recouvertes par une électrode étant en contact avec un collecteur de courant terminal.

12. Batterie bipolaire selon l'une des revendications 10 ou 11, dans laquelle les dimensions des collecteurs de courant (101) sont égales à celles de toutes les électrodes (11, 12, 11', 12").

13. Batterie bipolaire selon l'une des revendications 10 à 12, dans laquelle les anodes (12, 12") sont en Li₄Ti₅O₁₂ et les cathodes (11, 11') en LiFePO4.

14. Procédé de réalisation d'une batterie bipolaire comprenant au moins deux cellules électrochimiques (C1, C2) empilées l'une sur l'autre comprenant les étapes suivantes :
a/ réalisation d'un dispositif (1) selon la revendication 8 et deux dispositifs (1', 1") selon la revendication 9 de sorte que :
- l'une des parties affleurantes du collecteur de courant d'un (1") des deux dispositifs selon la revendication 9 est recouverte d'une anode (12") en matériau d'insertion au lithium,
- l'une des parties affleurantes du collecteur de courant de l'autre (1') des deux dispositifs selon la revendication 9 est recouverte d'une cathode (11') en matériau d'insertion au lithium et,
- l'une des parties affleurantes du collecteur de courant du dispositif (1) selon la revendication 8 est recouverte d'une cathode (11) en matériau d'insertion au lithium tandis que l'autre des parties affleurantes du collecteur de courant du dispositif selon la revendication 8 est recouverte d'une anode (12) en matériau d'insertion au lithium,
b/ empilement des trois dispositifs (1, 1', 1") avec intercalage d'un séparateur (3) entre deux adjacents, l'empilement avec intercalage étant réalisé de sorte que :
- l'anode (12") de l'un (1") des deux dispositifs selon la revendication 9 est en regard de la cathode (11) du dispositif (1) selon la revendication 8 en étant séparés d'un premier séparateur (3),
- la cathode (11') de l'autre ces deux dispositifs selon la revendication 8 est en regard de l'anode (12) du dispositif (1) selon la revendication 8 en étant séparés d'un deuxième séparateur (3),
c/ mise en pression des périphéries (100P) des trois bandes des dispositifs les unes contre les autres, les séparateurs (3) étant imprégnés chacun d'un électrolyte,
d/ maintien des trois bandes pressées les unes contre les autres afin de constituer une paroi étanche aux électrolytes des deux cellules qui entoure celles-ci.

15. Procédé selon la revendication 14 d'une batterie bipolaire comprenant n cellules électrochimique empilées individuellement les unes sur les autres, selon lequel on réalise les étapes a/ à d/ avec (n-1) dispositifs selon la revendication 8 et deux dispositifs selon la revendication 9, aux extrémités de l'empilement, n étant un nombre entier.

16. Procédé selon la revendication 14 ou 15, selon lequel les étapes c/ et d/ sont réalisées par la mise en place de l'emballage rigide (4) de la batterie bipolaire, ou par thermoscellage à l'aide d'un mors (5) en forme de U autour des parties périphériques des bandes en matériau isolant électrique.

17. Procédé selon l'une des revendications 13 à 16, selon lequel le dépôt d'au moins une électrode sur l'une des parties affleurantes d'au moins un des dispositifs est réalisé par une technique d'impression.

## Patentansprüche

1. Vorrichtung (1, 1', 1") für einen elektrochemischen Generator aus Lithium, **dadurch gekennzeichnet, dass** sie ein Band (100) aus elektrisch isolierendem Material umfasst, welches mindestens ein Polymer und ein einen Stromabnehmer bildendes Gitter (101) oder eine Relieffolie aus Metall aufweist, wobei die beiden Seiten des Gitters bzw. der Relieffolie in dem Band freiliegend angeordnet sind, wobei der Rand des Bandes (100P) kein Gitter oder keine Relieffolie aufweist und zumindest einer der beiden freiliegenden Teile (101A) des Gitters oder der Relieffolie von einer Elektrode aus Lithium-Insertionsmaterial überdeckt ist.

2. Vorrichtung (1, 1', 1") nach Anspruch 1, in welcher das das Band mehrheitlich ausmachende Polymer ein Polyolefin ist.

3. Vorrichtung (1, 1', 1") nach Anspruch 2, in welcher das Band zumindest ein anderes Polymer aufweist, welches beispielsweise zwischen einem Polyester oder einem Polyurethan ausgewählt wird, wobei das besagte andere Polymer zwischen das Polyolefin und den Stromabnehmer eingelegt wird, um das Zusammenhalten zwischen diesen zu verbessern.

4. Vorrichtung (1, 1', 1") nach Anspruch 2, in welcher das Band mindestens einen Haftförderer aufweist, wobei dieser Haftförderer zwischen das Polyolefin und den Stromabnehmer eingelegt, um das Zusammenhalten zwischen diesen zu verbessern.

5. Vorrichtung (1, 1', 1") nach Anspruch 1, in welcher das das Band mehrheitlich ausmachende Polymer ein Zweikomponentenharz ist.

6. Vorrichtung (1, 1', 1") nach einem der vorhergehenden Ansprüche, in welcher der Stromabnehmer (101) aus Aluminium hergestellt ist und/oder ein Gitter (101) oder eine Relieffolie aus Metall an der Oberfläche eines anderen Metalls ist.

7. Vorrichtung (1, 1', 1") nach einem der vorhergehenden Ansprüche, in welcher der Stromabnehmer als zentraler Rahmen in dem Band aus isolierendem Material ausgebildet ist.

8. Vorrichtung (1) nach einem der vorhergehenden Ansprüche, in welcher die beiden freiliegenden Teile (101A) des Stromabnehmers (101)jeweils von einer Elektrode (11, 12) aus Lithium-Insertionsmaterial bedeckt sind.

9. Vorrichtung (1', 1") nach einem der Ansprüche 1 bis 7, in welcher ein einziger der beiden freiliegenden Teile des Stromabnehmers von einer Elektrode (11', 12") aus Lithium-Insertionsmaterial bedeckt ist.

10. Zweipolige Batterie, welche mindestens zwei elektrochemische Zellen (C1, C2) umfasst, welche aufeinander gestapelt sind, sowie mindestens eine Vorrichtung (1) nach Anspruch 8 umfasst, in welcher einer der beiden freiliegenden Teile des Stromabnehmers (101) von der Anode (12) aus Lithium-Insertionsmaterial der einen der beiden Zellen überdeckt ist, und in welcher der andere der beiden freiliegenden Teile des Stromabnehmers (101) von der Kathode (11) aus Lithium-Insertionsmaterial der anderen der beiden Zellen überdeckt ist, wobei der Rand (100P) des Bandes aus zumindest einem Polymer eine Randzone einer Dichtungswand aus Elektrolyten der beiden Zellen bildet, welche diese umgibt.

11. Zweipolige Batterie nach Anspruch 10, welche darüber hinaus mindestens eine Vorrichtung (1', 1") nach Anspruch 9 aufweist, wobei der andere der beiden freiliegenden Teile, welche nicht von einer Elektrode bedeckt sind, in Kontakt mit einem Endstromabnehmer ist.

12. Zweipolige Batterie nach einem der Ansprüche 10 oder 11, in welcher die Abmessungen der Stromabnehmer (101) mit denen aller Elektroden (11, 12, 11', 12") identisch sind.

13. Zweipolige Batterie nach einem der Ansprüche 10 bis 12, in welcher die Anoden (12, 12") aus Li₄Ti₅O₁₂ und die Kathoden (11, 11') aus LiFeP04 hergestellt sind.

14. Verfahren zur Herstellung einer zweipoligen Batterie, welche zumindest zwei aufeinander gestapelte elektrochemische Zellen (C1, C2) aufweist, wobei das Verfahren die folgenden Schritte umfasst:
a) Herstellung einer Vorrichtung (1) nach Anspruch 8 sowie zweier Vorrichtungen (1' 1") nach Anspruch 9, so dass:
- der eine der freiliegenden Teile des Stromabnehmers einer (1") der beiden Vorrichtungen nach Anspruch 9 von einer Anode (12") aus Lithium-Insertionsmaterial überdeckt ist;
- der eine der freiliegenden Teile des Stromabnehmers der anderen (1') der beiden Vorrichtungen nach Anspruch 9 von einer Kathode (11') aus Lithium-Insertionsmaterial überdeckt ist; und
- der eine der freiliegenden Teile des Stromabnehmers der Vorrichtung (1) nach Anspruch 8 von einer Kathode (11) aus Lithium-Insertionsmaterial überdeckt ist, während der andere der freiliegenden Teile des Stromabnehmers der Vorrichtung nach Anspruch 8 von einer Anode (12) aus Lithium-Insertionsmaterial überdeckt ist;
b) Stapelung der drei Vorrichtungen (1, 1', 1") mit Einlage eines Separators (3) zwischen zwei benachbarten Vorrichtungen, wobei die Stapelung mit Einlage derart erfolgt, dass:
die Anode (12") der einen (1") der beiden Vorrichtungen nach Anspruch 9 der Kathode (11) der Vorrichtung (1) nach Anspruch 8 gegenübersteht, wobei sie durch einen ersten Separator (3) voneinander getrennt sind;
die Kathode (11') der anderen der beiden Vorrichtungen nach Anspruch 8 der Anode (12) der Vorrichtung (1) nach Anspruch 8 gegenübersteht, wobei sie durch einen zweiten Separator (3) voneinander getrennt sind;
c) Unterdrucksetzung der Ränder (100P) der drei Bänder der Vorrichtungen untereinander, wobei die Separatoren (3) jeweils mit einem Elektrolyten getränkt sind;
d) Beibehaltung der drei Bänder in gegeneinander gedrücktem Zustand, bis sich eine Dichtungswand aus Elektrolyten der beiden Zellen bildet, welche diese umgibt.

15. Verfahren nach Anspruch 14 zur Herstellung einer zweipoligen Batterie, welche n elektrochemische Zellen aufweist, welche einzeln aufeinander gestapelt sind, gemäß welchem die Schritte a) bis d) mit (n-1) Vorrichtungen nach Anspruch 8 und zwei Vorrichtungen nach Anspruch 9 an den Enden des Stapels durchgeführt werden, wobei n eine ganze Zahl ist.

16. Verfahren nach Anspruch 14 oder 15, gemäß welchem die Schritte c) und d) durchgeführt werden, indem die steife Verpackung (4) der zweipoligen Batterie angebracht wird, oder durch Heißsiegelung mit Hilfe eines Greifers (5) in Form eines U um die Randteile der Bänder aus elektrisch isolierendem Material herum.

17. Verfahren nach einem derAnsprüche 13 bis 16, gemäß welchem die Lagerung oder Ablage zumindest einer Elektrode auf dem einen der freiliegenden Teile zumindest einer der Vorrichtungen mit Hilfe einer Drucktechnik erfolgt.

## Claims

1. A device (1, 1' , 1") for a lithium electrochemical generator, **characterised in that** it includes a strip (100) made of electrical insulator material including at least one polymer and one metal grate (101), or one raised metal sheet, forming a current collector, housed in the strip, flush on both its faces, the periphery of the strip (100P) having no grate or raised sheet, and at least one of two flush portions (101A) of the grate or the raised sheet being covered with an electrode made of lithium insertion material.

2. A device (1, 1', 1") according to claim 1, in which the majority polymer constituting the strip is a polyolefin.

3. A device (1, 1', 1") according to claim 2, in which the strip includes at least one other polymer, for example chosen from among a polyester or a polyurethane, where the said other polymer is interposed between the polyolefin and the current collector to improve the attachment between them.

4. A device (1, 1', 1") according to claim 2, in which the strip includes at least one adherence promoter, where the said adherence promoter is interposed between the polyolefin and the current collector to improve the attachment between them.

5. A device (1, 1', 1") according to claim 1, in which the majority polymer constituting the strip is a two-component resin.

6. A device (1, 1', 1") according to one of the previous claims, in which the current collector (101) is made of aluminium, and/or is a grate (101) or electroplated raised sheet at the surface of another metal.

7. A device (1, 1', 1") according to one of the previous claims, in which the current collector is centred in the strip made of insulator material.

8. A device (1) according to one of the previous claims, in which both flush portions (101A) of the current collector (101) are covered with an electrode (11, 12) made of lithium insertion material.

9. A device (1', 1") according to one of claims 1 to 7, in which a single one of the two flush portions of the current collector is covered with an electrode made of lithium insertion material (11' , 12").

10. A bipolar battery including at least two electrochemical cells (C1, C2) stacked one on the other, and at least one device (1) according to claim 8, in which one of the two flush portions of the current collector (101) is covered with the anode (12) made of lithium insertion material of one of the two cells and the other of the two flush portions of the current collector (101) is covered with the cathode (11) made of lithium insertion material of the other of the two cells, and where the periphery (100P) of the strip made of at least one polymer constitutes a peripheral area of a wall sealed against the electrolytes of the two cells surrounding these electrolytes.

11. A bipolar battery according to claim 10, also including at least one device (1', 1") according to claim 9, where the other of the two flush portions not covered by an electrode is in contact with a terminal current collector.

12. A bipolar battery according to one of the claims 10 or 11, in which the dimensions of the current collectors (101) are equal to those of all the electrodes (11, 12, 11', 12").

13. A bipolar battery according to one of the claims 10 to 12, in which the anodes (12, 12") are made of Li₄Ti₅O₁₂ and the cathodes (11, 11') of LiFeP04.

14. A method for producing a bipolar battery including at least two electrochemical cells (C1, C2) stacked one on the other, including the following steps:
a/ production of a device (1) according to claim 8 and two devices (1', 1") according to claim 9, such that:
- one of the flush portions of the current collector of one (1") of the two devices according to claim 9 is covered with an anode (12") made of lithium insertion material,
- one of the flush portions of the current collector of one of the other (1') of two devices according to claim 9 is covered with a cathode (11') made of lithium insertion material and,
- one of the flush portions of the current collector of the device (1) according to claim 8 is covered with a cathode (11) made of lithium insertion material, whereas the other of the flush portions of the current collector of the device according to claim 8 is covered with an anode (12) made of lithium insertion material,
b/ stacking of the three devices (1, 1', 1"), with sandwiching of a separator (3) between two adjacent ones, where the stacking with sandwiching is accomplished such that:
- the anode (12") of one (1") of the two devices according to claim 9 is facing the cathode (11) of the device (1) according to claim 8, where these devices are separated by a first separator (3),
- the cathode (11') of the other of the two devices according to claim 8 is facing the anode (12) of the device (1) according to claim 8, where these devices are separated by a second separator (3),
c/ pressing of the peripheries (100P) of the three strips of the devices the ones against the others, each of the separators (3) being impregnated with an electrolyte,
d/ keeping the three strips pressed the ones against the others in order to constitute a wall which is sealed against the electrolytes of the two cells surrounding the latter.

15. A method according to claim 14 of a bipolar battery including n electrochemical cells stacked individually on each other, according to which steps a/ to d/ are accomplished with (n-1) devices according to claim 8 and two devices according to claim 9, at the ends of the stack, where n is an integer.

16. A method according to claim 14 or 15, according to which steps c/ and d/ are accomplished by the installation of the rigid packaging (4) of the bipolar battery.

17. A method according to one of the claims 13 to 16, according to which the deposition of at least one electrode on one of the flush portions of at least one of the devices is accomplished by a printing technique.
